# EUROPÄISCHE PATENTANMELDUNG

(11) **EP 1 481 752 A2**
(43) Veröffentlichungstag der Anmeldung: **01.12.2004**
(21) Anmeldenummer: 04102121.3
(22) Anmeldetag: 14.05.2004
(51) Int. Cl.: B23K 26/12

(54) **Schutzgaseinrichtung für die Lasermaterialbearbeitung**

(30) Priorität: 28.05.2003 DE 10324181
(71) Anmelder: MESSER GRIESHEIM GmbH, 65933 Frankfurt am Main (DE)
(72) Erfinder: Hildebrandt, Bernd Dr., 47918, Tönisvorst (DE)
(74) Vertreter: Jäger, Gerhard Fred

(57) **Zusammenfassung**

Die Erfindung betrifft eine Schutzgaseinrichtung für die Lasermaterialbearbeitung, insbesondere für das das Laser-Remote-Schweißen, bestehend aus einem ein in einem Arbeitsbereich einer Laserstrahlung (3) angeordnetes und zu schweißendes Werkstück (4) aufnehmenden und mit einem das zu schweißende Werkstück (4) allseitig umströmendes Schutzgas (9) beaufschlagten Behälter (5).

Die erfindungsgemäße Schutzgaseinrichtung ermöglicht eine sichere und kostengünstige Schutzgaszuführung in den Schweißbereich des zu schweißenden Werkstücks und damit eine gleichmäßig hohe Schweiß-qualität.

## Beschreibung

Die Erfindung betrifft eine Schutzgaseinrichtung für die Lasermaterial-bearbeitung, insbesondere für das Laser-Remote-Schweißen.

Beim Laser-Remote-Schweißen erfolgt die Laserstrahlbewegung - nicht wie konventionell bekannt - rein mechanisch über translatorische oder Dreheinheiten, sondern mittels ferngesteuerter Ablenkeinrichtungen (Spiegel, Fokussierlinse), sodassvon einem zentralen Anlagenpunkt aus - das Schweißen beliebiger dreidimensionaler Konturen verfolgt werden kann.

Das in einem Arbeitsbereich von etwa 2400x1500x500 mm einsetzbare CO2-Laser-Remote-Schweißen wird besonders vorteilhaft der industriellen Materialbearbeitung zu Vielpunktschweißungen im Blechbereich, wie beispielsweise zum 3D-Schweißen von Automobilkomponenten, wie Türen, Klappen u. ä., eingesetzt.

Zum Schweißen wird der Laserstrahl mittels unterschiedlicher Handhabungswerkzeuge, wie z.B. Portale, Gelenkroboter oder Drehvorrichtungen, geführt.

Das beim Laser-Remote-Schweißen zum Abschirmen der Schweißstellen vor atmosphärischen Störeinflüssen und zur maßgeblichen Prozessbeeinflussung in den Schweißstellenbereich eingebrachte Schutzgas wird mit - in der Regel mit Abstand zum Laserstrahl mittels einer mitgeführten Düse, aber auch durch in dem Spannwerkzeug der Schweißanlage integrierten - Gaszuführungsmitteln, wie z.B. Düsen oder perforierte Rohren, zeitgleich mit dem Laserstrahl, auf die Schweißstelle/n des Werkstücks so aufgebracht, dass die Scheißstelle des Laserstrahls umspült wird.

Bei den bisherigen Anwendungen des Laser-Remote-Schweißens wird entweder auf Schutzgas verzichtet, was zu Qualitätsproblemen führen kann, oder erfordert einen relativ hohen materialtechnischen Aufwand , wie z.B. speziellen Vorrichtungsbau.

Der Erfindung liegt daher die Aufgabenstellung zugrunde, eine Einrichtung für die Lasermaterialbearbeitung, insbesondere für das Laser-Remote-Schweißen zur Verfügung zu stellen, mit welcher eine sichere und kostengünstige Schutzgaszuführung in den Schweißbereich des zu schweißenden Werkstücks möglicht ist.

Die Aufgabe wird erfindungsgemäß durch eine Schutzgaseinrichtung mit den Merkmalen von Anspruch 1 gelöst.

Weitere Ausgestaltungen der Erfindung sind den Unteransprüchen zu entnehmen.

Die erfindungsgemäße Schutzgaseinrichtung ermöglicht ein sichere und kostengünstige, von atmosphärischen Störeinflüssen unabhängige Schutzgaszuführung in den Schweißbereich des zu schweißenden Werkstücks und damit ein den ständig steigenden Anforderungen entsprechendes Schweißen von metallischen Werkstücken, insbesondere Vielpunktschweißungen im Blechbereich, wie beispielsweise von Automobilkomponenten, wie z. B. Türen, Klappen u. ä.

Der als Schutzgaseinrichtung eingesetzte, das im Arbeitsbereich der Laserstrahlung zu schweißende Werkstück aufnehmende und mit einem Schutzgas beaufschlagte Behälter besteht in der Regel aus einer Bodenwand und Seitenwänden und weist mindestens eine in den Seitenwänden angeordnete Öffnung für die Zuführung des Schutzgases in den Behälterinnenraum auf.

Der als Schutzgaseinrichtung eingesetzte Behälter ist in seinem Aufbau, seiner geometrischen Formgebung und Abmessungen den jeweiligen Einsatzbedingungen entsprechend ausgebildet.

Vorteilhaft ist der das zu schweißende Werkstück und das Schutzgas aufnehmende Behälter als in Teilbereichen zur Einbringung des Laserstrahls offene Wanne ausgebildet.

Bei Einsatz eines Schutzgases, das schwerer als Luft ist, was wiederum dichtebedingt aber auch durch Abkühlung von Gasen erreicht werden kann, verhindert das das in dem Behälter zu schweißende Werkstück von atmosphärische Störeinflüssen geschädigt wird, der Prozess positiv beeinflusst werden kann und damit eine gleichmäßig hohe Schweißqualität gegeben ist.

Die das Schutzgas in den das zu schweißende Werkstück enthaltenden Behälter leitende Gaszuführung kann des Weiteren, das Schutzgas im das zu schweißende Werkstück enthaltenden Behälter verteilende, entsprechend der bestimmungsgemäßen Anwendung und der jeweiligen Bauteilgröße ausgebildete Elemente, wie z.B. Sintermetallkörper oder perforierten Verteilerschlangen, aufweisen.

Bei Einsatz eines Schutzgases, das leichter als Luft ist, wird der Behälter einfach um 180 Grad gedreht, sodass dann durch den, nach oben geschlossenen Behälterinnenraum sich das Schutzgas oben sammeln kann.

Die erfindungsgemäße Schutzgaseinrichtung ist auch bei allen anderen bekannten Verfahren der Lasermaterialbearbeitung, wie beispielsweise Härten, Schneiden und Dispergieren, vorteilhaft einsetzbar.

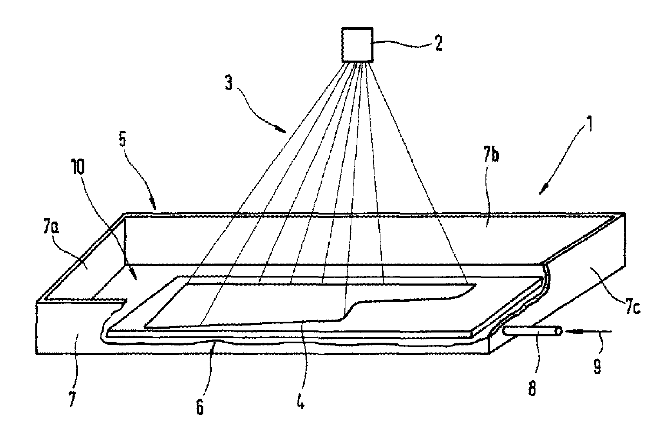

Nachfolgend wird die Erfindung anhand eines in der Zeichnung dargestellten Ausführungsbeispiels näher erläutert.

In der Zeichnung (einzige Figur) ist schematisch eine erfindungsgemäße Schutzgaseinrichtung 1 in Anordnung zu einem Laser-Remote-Schweißkopf 2 dargestellt. Die im Arbeitsbereich einer aus dem Schweißkopf 2 austretenden Laserstrahlung 3 angeordnete, ein zu schweißendes Werkstück 4 enthaltende Schutzgaseinrichtung 1 besteht aus einem Behälter 5 mit einer Bodenwand 6 und Seitenwänden 7, 7a, 7b, 7c und einer in der Seitenwand 7c angeordneten Gaszuführung 8 für ein Schutzgas 9, welches durch die Gaszuführung 8 in einen Innenraum 10 des Behälters 5 strömt. Wie in der Figur dargestellt, strömt das Schutzgas 9, welches schwerer als Luft ist, beispielsweise Argon oder tiefkaltes gasförmiges Helium bzw. entsprechende Gasgemische, durch die Gaszuführung 8 in den Innenraum 10 des Behälters 5 ein und schirmt den Schweißbereich des in dem Behälter 5 mittels der Laserstrahlung 3 zu schweißende Werkstück 4 während des Schweißprozesses vollständig von atmosphärischen Störeinflüssen ab. Prozessbeeinflussende Komponenten können so wirkungsvoll den Strahl bzw. die Schweißstelle beeinflussen. Beim - bildlich nicht dargestelltem - Einsatz eines Schutzgases, welches leichter als Luft ist, wird der Behälter 5 einfach um 180 Grad gedreht, wodurch die Bodenwand 6 nunmehr eine den Behälter 5 nach oben verschließende Wand bildet, sodass das in dem Innenraum 10 das zu schweißende Werkstück 4 allseitig umströmende Schutzgas 9 nicht mehr nach oben in die Umgebungsatmosphäre entweichen kann.

Des Weiteren kann die Gaszuführung 8 auch - in der Figur nicht näher bezeichnete - das im Behälter 5 eingeströmte Schutzgas 9 verteilende, der bestimmungsgemäßen Anwendung und der jeweiligen Bauteilgröße angepasste Elemente, wie z.B. Sintermetallkörper oder perforierte Verteilerschlangen, aufweisen.

## Patentansprüche

1. Schutzgaseinrichtung für die Lasermaterialbearbeitung, insbesondere für das Laser-Remote-Schweißen, umfassend einen in einem Arbeitsbereich einer Laserstrahlung (3) angeordneten und ein zu schweißendes Werkstück (4) aufnehmenden und mit einem das zu schweißende Werkstück (4) allseitig umströmendes Schutzgas (9) beaufschlagten Behälter (5).

2. Schutzgaseinrichtung nach Anspruch 1, **dadurch gekennzeichnet, dass** der Behälter (5) aus einer Bodenwand (6) und Seitenwänden (7, 7a, 7b, 7c) besteht.

3. Schutzgaseinrichtung nach Anspruch 1 oder 2, **dadurch gekennzeichnet, dass** der Behälter (5) mindestens in den Behälterseitenwand angeordnete Gaszuführung (8) aufweist.

4. Schutzgaseinrichtung nach Anspruch 3, **dadurch gekennzeichnet, dass** die Gaszuführung (8) das in dem Behälter (5) eingeströmte Schutzgas (9) verteilende Elemente aufweist.

5. Schutzgaseinrichtung nach Anspruch 4, **dadurch gekennzeichnet, dass** die das Schutzgas (9) im Behälter (5) verteilenden Elemente Sintermetallkörper und/oder perforierte Verteilerschlangen sind.

6. Schutzgaseinrichtung nach einem der Ansprüche 1 bis 5, **dadurch gekennzeichnet, dass** der Aufbau und die Formgebung sowie die Abmessungen des Behälters (5) variabel sind.
